# EUROPEAN PATENT SPECIFICATION

(11) **EP 3 476 210 B1**
(45) Date of publication and mention of the grant of the patent: **24.11.2021**
(21) Application number: 18203180.7
(22) Date of filing: 29.10.2018
(51) Int. Cl.: A01G 17/08

(54) **TYING MACHINE, METHOD AND TIE STRING FOR TYING SHOOTS OF PLANTS SUCH AS GRAPEVINES, VEGETABLE PLANTS AND CLIMBING PLANTS**
VERBINDUNGSEINRICHTUNG, VERFAHREN UND BINDEDRAHT ZUR VERBINDUNG VON PFLANZENSPROSSEN WIE WEINREBEN, GEMÜSEPFLANZEN UND KLETTERPFLANZEN
MACHINE DE LIAGE, MÉTHODE ET FICELLE D'ATTACHE POUR DES POUSSES DE PLANTE À LIER TELLES QUE DES VIGNES, DES PLANTES VÉGÉTALES ET DES PLANTES GRIMPANTES

(30) Priority: 30.10.2017 IT 201700123502
(43) Date of publication of application: 01.05.2019
(73) Proprietor: Campagnola S.R.L., 40069 Zola Predosa (Bologna) (IT)
(72) Inventor: PELLICANO', Pasquale Patrizio, 40026 Imola (Bologna) (IT); PREDIERI, Loredana, 40053 Valsamoggia-Crespellano (Bologna) (IT)
(74) Representative: Conti, Marco

(56) References cited:
- WO-A1-2006/021016
- WO-A1-2015/162595
- WO-A2-2004/090209
- ES-A1- 2 536 582
- SU-A1- 686 679
- SU-A1- 1 152 547
- US-A- 4 610 067
- US-A- 4 945 674

## Description

This invention relates to a tying machine, as well as to a method for tying shoots of plants such as grapevines, vegetable plants and climbing plants.

A tying machine is an electromechanical machine widely used in the agricultural sector for fastening shoots of plants, such as but not limited to grapevines, to suitable supports, in order to favour their vertical growth along rows. In particular, tying shoots of grapevines is an activity which regulates the growth of the plant, and is usually performed after winter the pruning and before spring budding. Tying operations differ depending if the tying is manual or assisted. In manual tying the operator carries out the string tying and cutting operations by hand. In assisted tying the operator holds the tying machine in one hand and with the other hand shapes the shoot to be tied. Therefore, the tying machine rapidly performs in sequence the operations of feeding, winding, cutting and fastening the tie string.

Patent document EP0763323 describes a tying machine comprising a member for picking up and a member for feeding a tie string, a hook-shaped guide for winding the string around the shoot and forming a loop, a cutting system for cutting the tie string at the ends of the loop and a twisting device for closing the loop by twisting together the cut ends of the loop.

Patent document FR2953097 describes a tying machine comprising a double hook-shaped guide for winding the string around the shoot and forming a loop and is equipped with a cutting member and a gripping member, respectively configured to cut and to grasp the ends of the loop; the double hook-shaped guide also rotates on a related axis of rotation to twist the cut ends of the loop and close the loop.

Both of the solutions of EP0763323 and FR2953097 therefore involve the use of a tie string made of metal or having a metallic core, excluding elastic return from the loop closed position, with the ends of the string twisted over themselves, to a loop open position, in which the shoot is no longer tied. The use of metal string is unsuited to environmental sustainability criteria and, if it is not manually removed at the end of the shoot growing season, causes problems of pollution and environmental impact and obstructs further growth of the shoots beyond the diameter of the tying loop. Moreover, each tie requires a non-negligible quantity of string, necessary both for creating the loop and for twisting its ends. Further problems may be traced to the speed and sturdiness of the machine.

Other tying machines are disclosed in the following patent documents: US4945674A1, SU1152547A1, ES2536582A1, US4610067A, SU686679A1.

The aim of this invention is to provide a tying machine and a method for tying shoots of plants such as grapevines, vegetable plants and climbing plants, which overcome the above-mentioned disadvantages of the prior art.

Said aim is fulfilled by the tying machine and the method for tying shoots according to this invention, characterised as described in the appended claims.

The machine according to this description is a tying machine for tying shoots of plants such as grapevines, vegetable plants and climbing plants. The tying machine includes a tie string. The tie string in one embodiment is composed entirely of polymer material. The tie string in one embodiment is free of metallic components. The tie string in one embodiment is composed of a single material. The material used to make the string is a polymer material, composed of a plurality of polymers. In other words, the tie string has no metallic core. The polymer material in one embodiment is biodegradable. The polymer material in one embodiment is compostable.

The polymer material in one embodiment is weldable.

In one embodiment, the tying machine includes a hand-held unit. In one embodiment, the tying machine includes a supporting unit.

In one embodiment, the hand-held unit comprises a feeder. The feeder is configured to pick up one end of the tie string from a roll. The feeder is configured to feed the end of the tie string, and therefore the tie string. In one embodiment, the feeder is configured to feed the tie string along a feed axis and in a feed direction.

In one embodiment, the hand-held unit comprises a winding guide. In one embodiment, the winding guide is hook-shaped.

In one embodiment, the winding guide includes a passage for the tie string. The passage for the tie string in one embodiment is a hole (curved like a hook). The winding guide is configured for guiding the tie string around a shoot. The winding guide is configured for guiding the end of the tie string around the shoot and a support (for example, a pole). The winding guide is configured for guiding the tie string to form a loop surrounding the shoot. The winding guide is configured for forming the loop until a first pair of portions of the string are in a position near one another. The first pair of strings in one embodiment comprises the end of the string.

In one embodiment, the hook-shaped winding guide extends between a base connected to the frame, and an end opposite the base, and is movable relative to the frame between an open configuration, in which the end is distanced from the frame, and a closed configuration, in which the end is in contact with (or is near) the frame. In the closed configuration, the winding guide drawn near the frame forms a closed ring.

The loop in one embodiment surrounds the shoot. The loop in one embodiment surrounds the support. In one embodiment, the loop is a slip knot.

The hand-held unit in one embodiment comprises a tightening device. The tightening device in one embodiment is configured to tighten the loop around the shoot. The tightening device in one embodiment is configured to reduce the perimeter of the loop, until it draws near one another a first portion of the tie string and a second portion of the tie string. The tightening device is configured to draw near one another the first portion of the tie string and a second portion of the tie string. The second portion in one embodiment is between the feeder and the winding guide.

In one embodiment, the tightening device is configured to generate sliding of the two portions of string drawn near one another (that is to say, of one portion relative to the other) for forming the loop.

In one embodiment, the first portion, which has been wound around the shoot, is stopped and held in position (for example, by means of the winding guide itself, which in a closed configuration forms a closed ring around the shoot), whilst the tightening device implements sliding of a remaining portion of the string relative to the first portion.

Therefore, the winding guide is configured to wind the string around the shoot to form the loop; the tightening device is configured to tighten the loop formed around the shoot, until its size is close to the size of the shoot. Following tightening, the loop is therefore formed by the portion of tie string located between the first portion and the second portion. The first portion and the second portion of the tie string form a second pair of portions.

The second pair of portions in one embodiment is separate from the first pair of portions. At least one out of said first portion and second portion of the second pair of portions is different from each of the portions of the first pair of portions. Therefore, the first pair of portions contains the loop formed by the winding guide, whilst the second pair contains the loop tightened by the tightening device. In one embodiment, the loop formed by the second pair of portions has a shorter length than the loop formed by the first pair of portions.

In one embodiment the tightening device is configured to apply a preload to a portion of the tie string, for making it slide relative to the tie string coming out of the feeder.

In one embodiment, tightening device is configured to apply a preload to a portion of the tie string, for making it slide relative to the other portion of the first pair. In one embodiment the tightening device is configured to apply a preload to a portion of the tie string, for making it slide relative to the other end of the loop.

The tightening device in one embodiment is configured to make the end of the tie string slide relative to the tie string coming out of the feeder. In this embodiment, the end of the string constitutes both a portion of the first pair of portions and the first portion of the second pair of portions, whilst the remaining portion of the first pair is different from the remaining (second) portion of the second pair.

The term portion refers to a portion of the string with predetermined length (the length may be approximately one centimetre, or several centimetres, for example, but there is also the possibility of selecting different lengths). The tightening device in one embodiment includes a clamp.

The clamp in one embodiment is configured to stop the end of the portion of tie string, while letting the tie string coming out of the feeder slide freely relative to the end of the tie string, until a second portion is superposed on the end of the string. In this case, the end of the string constitutes the first portion of the first pair and the first portion of the second pair.

The clamp in one embodiment is configured to stop the second portion of the tie string, letting the end of the tie string slide freely relative to it, until a first portion is superposed on the second portion. In this case the second portion of the second pair also constitutes a portion of the first pair, whilst the first portion of the second pair is different from the end of the tie string. The tightening device in one embodiment includes a sliding guide. The sliding guide is configured to allow a stretch of the tie string to slide through the sliding guide itself.

In one embodiment, the sliding guide is configured to allow sliding of the tie string coming out of the feeder relative to the end of the tie string (stopped by the clamp).

In one embodiment, the sliding guide is configured to allow sliding of the end of the string relative to the second portion (stopped by the clamp).

In one embodiment, the sliding guide includes a clip. The clip in one embodiment is movable relative to the frame of the supporting unit. The clip in one embodiment is configured to slide relative to two ends of the tie string, until the first portion and the second portion are superposed.

The clamp in one embodiment is configured to stop both of the portions of the first pair of portions. In this embodiment the tightening device is configured to make the clip slide on the two portions of the tie string of the first pair. In this embodiment, the two portions of the first pair are simultaneously pulled to tighten the loop, whilst the clip, sliding on them, reduces the perimeter of the loop.

The clip in one embodiment is fixed relative to the frame of the supporting unit. The clamp in one embodiment is movable relative to the frame of the supporting unit. In this embodiment the tightening device is configured to make the clamp move, the clamp shifting with it the two portions of the string of the first pair. In this embodiment, the two portions of the first pair slide through the sliding guide (the clip) reducing the perimeter of the loop. In one embodiment, the clamp is configured to stop the end of the tie string and is movable relative to the frame. In one embodiment, the clamp is configured to stop a portion of the tie string coming out of the feeder and is movable relative to the frame.

The tightening device in one embodiment includes a pulling member. The pulling member is configured to apply a pulling action on the stretch of the string coupled to the sliding guide. The pulling member in one embodiment comprises a pulling actuator.

The pulling member in one embodiment includes a pulling roller. In one embodiment the pulling actuator is connected to the pulling roller and configured to drive its rotation. The pulling roller is configured to pull the tie string along the feed axis in a pulling direction, opposite to the feed direction. The pulling roller in one embodiment is configured to apply a preload to the tie string coming out of the feeder. The pulling roller in one embodiment is configured to pull the tie string when the clamp is stopping the end of the tie string. The pulling roller in one embodiment has a knurled surface. The pulling roller in one embodiment is configured to pull the tie string by friction. In one embodiment the clamp is movable along the feed axis. In that embodiment the tightening device is configured to apply a preload to the first portion of the tie string, for making it slide relative to the second portion of the tie string.

In one embodiment tightening device includes a twister. The twister in one embodiment includes (that is to say, operates in conjunction with) a gripping element. The gripping element is configured to retain the two portions of the first pair of the tie string. The gripping element rotates relative to the frame of the hand-held unit, for twisting together the two portions of the first pair of the tie string. The gripping element in one embodiment is motor-driven. In this embodiment tightening is carried out by twisting: the greater the number of twisting turns performed, the greater the reduction in the length of the loop is.

The tightening device in one embodiment includes both the pulling roller and the twister, which are configured to operate in conjunction with one another for tightening the loop.

The winding guide in one embodiment includes a fixed part. The winding guide in one embodiment includes a movable part. The movable part in one embodiment includes the passage for the tie string. The movable part in one embodiment is rotatable around a pin for moving tie string towards the tightening device.

The hand-held unit in one embodiment comprises a gripping member. The gripping member in one embodiment comprises a gripper. The gripping member is configured to grasp the first portion of the tie string. The gripping member in one embodiment is positioned between tightening device and the hook-shaped winding guide. The gripping member in one embodiment is movable between an extended position, in which it is extended towards the winding guide, and a contracted position, in which it is contracted towards the tightening device. The gripping member is configured to pick up the first portion of the tie string from the winding guide and to feed it to the tightening device.

The gripping member in another embodiment is connected to the hook-shaped winding guide. The gripping member in one embodiment is movable between an extended position, in which it is extended towards the tightening device, and a contracted position, in which it is contracted behind the hook-shaped winding guide.

In at least one embodiment, the tightener is not present. For example, a tie string with a high degree of elasticity is used, which is stretched before being wound around the shoot and welded; the string, when released, tends to elastically contract, thereby reducing a length of the loop.

The hand-held unit in one embodiment includes a fastening unit. The fastening unit is configured to close the loop. The fastening unit is configured to close the loop around the shoot. The fastening unit is configured to fixedly connect the first portion to the second portion of the tie string. The fastening unit is configured to fixedly join to one another the first portion and the second portion of the tie string.

In one embodiment, the fastening unit comprises a welding device. In one embodiment, the fastening unit is a welding device. In one embodiment, the welding device is configured to weld together two portions of the tie string. In one embodiment, the welding device is configured to weld the first portion of the tie string to the second portion of the tie string. Fastening of the loop by welding allows the quantity of tie string used per loop to be minimised.

In one embodiment, the welding device includes a portion movable between an inactive position and an active position. In the inactive position, that portion is away from the first and second portions which are drawn near one another. In the active position, that portion is near to the first and second portions which are drawn near one another. The active position is configured to allow the welding device to apply to the first portion and the second portion, which are drawn near one another, a physical action which involves a transfer of energy to those portions. The transfer of energy is such that the first and second portions are partly melted in such a way that they penetrate each other.

In one embodiment, the welding device is movable between an inactive position and a plurality of active positions. The plurality of active positions in one embodiment includes a first active position, near a first zone of the first portion and of the second portion, a second active position, near a second zone of the first portion and of the second portion. The first zone is adjacent to the second zone. The plurality of active positions in one embodiment includes a first active position, near a first zone of the first portion and of the second portion, a second active position, near a second zone of the first portion and of the second portion, a third active position, near a third zone of the first portion and of the second portion. The first zone is adjacent to the second zone. The second zone is adjacent to the third zone. Welding in a plurality of zones helps to reinforce the welding. The hand-held unit in one embodiment comprises a frame. The frame in one embodiment is a supporting structure of the hand-held unit. The frame may be made of plastic material. The frame in one embodiment has a handgrip portion.

In one embodiment, the welding device comprises a retaining member, configured to keep the first portion and the second portion of the tie string in a stationary position relative to the frame of the hand-held unit. The retaining member is configured to keep the first portion and the second portion in a stationary position for a predetermined lapse of time, which is at least equal to a thermal energy transfer time. In that stationary position, the first portion and the second portion are in contact with one another. That predetermined lapse of time in one embodiment comprises the thermal energy transfer time added to a cooling time, necessary for cooling the two partly melted portions. The retaining member in one embodiment includes a retaining clamp, configured to receive and stop, in contact with one another, the first portion and the second portion of the tie string. The retaining member in one embodiment is configured to keep the first portion and the second portion under pressure (to facilitate their interpenetration). In one embodiment, the retaining clamp coincides with the clamp. In one embodiment, the retaining clamp is separate from the clamp and is positioned in an intermediate position between the winding guide and the clamp, at the movable portion of the welding device.

In one embodiment, the welding device comprises an ultrasound generator. In one embodiment, the welding device (which in one embodiment includes an ultrasound generator) is housed in the frame (that is to say, in the body of the hand-held unit).

In one embodiment, the welding device comprises an anvil (that is to say, a contact surface). In one embodiment, the anvil is located (that is to say, housed) at the end of the winding guide, for making contact with the welding device in the closed configuration of the winding guide.

In one embodiment the ultrasound generator comprises a transformer, for raising the frequency of the power supply voltage. In one embodiment, the tying machine comprises a power supply cable. The power supply cable supplies electricity to the transformer. In one embodiment the ultrasound generator comprises a transducer, connected to the transformer, for transforming the electricity supplied by the transformer into mechanical energy in the form of vibration. In one embodiment, the transducer is made of a piezoelectric ceramic material, able to convert a variation in the electric field into a variation in the length/thickness of the piezoelectric ceramic material. In one embodiment, the ultrasound generator includes one or more gaskets, which are connected to the transducer, for isolating the transducer from the rest of the hand-held unit and preventing the vibrations from propagating to the operator. In one embodiment, the one or more gaskets are made of Teflon. In one embodiment, the one or more gaskets comprise two gaskets. In one embodiment, the ultrasound generator comprises an amplifier. In one embodiment the amplifier is connected to the gaskets. In one embodiment, the ultrasound generator comprises a sonotrode. In one embodiment, the sonotrode is connected to the amplifier. In one embodiment, the sonotrode is made of titanium. In one embodiment, the sonotrode has a geometry with axial symmetry. In one embodiment, the ultrasound generator comprises a contact surface. The contact surface is configured to support the first portion of the tie string and the second portion of the tie string. The contact surface in one embodiment is placed at the sonotrode. The contact surface in one embodiment is metallic. The contact surface in one embodiment is knurled. The knurling of the contact surface holds still (by friction) the first portion of the tie string during the tightening step, in one embodiment in which the clamp is not present. The contact surface in one embodiment is smooth. In that embodiment, the portion of the welding device movable between the active position and the inactive position may be the sonotrode, therefore configured to move towards the portions to be welded and to move away from them once the welding is complete. In another embodiment, the sonotrode is fixed (relative to the frame) and the contact surface is movable between the active position, extended towards the sonotrode, and the inactive position, away from the sonotrode.

Therefore the ultrasound generator is configured to cause the tie string to melt, transferring thermal energy to it by energy dissipation, or by means of high frequency mechanical vibrations which inside the string create intermolecular friction which results in a localised temperature increase. The heat increase is concentrated in an extremely short time (approximately tenths of a second) and on a well-defined area causes localised melting, which makes the first portion and the second portion of the tie string join together by penetrating one another. The ultrasound generator supplies a very precise welding device in limited zones, with high performance and with low power required.

In one embodiment, the welding device is a hot blade device. In that embodiment, the portion of the welder movable between the active position, for movement towards (in this case contact with) the portions to be welded is the hot blade itself. In one embodiment, the hot blade has two faces: a first face, which in the active position is in contact with the first portion of the tie string, and a second face, opposite to the first face, which in the active position is in contact with the second portion of the tie string. The hot blade is configured to transfer thermal energy by conduction to the two portions of the tie string with which it is in contact. That thermal energy causes the portions to partly melt.

In one embodiment, the welding device is a contactless hot welding device (for example, but not limited to using hot air). The contactless hot welding device causes a transmission of heat to the tie string by convection and/or irradiation in hot gases.

In one embodiment, the welding device is a friction welding device. In one embodiment, the welding device is a vibration welding device. The vibration welding device causes an increase in the temperature of the tie string by solid friction, that is to say, by reciprocating motion under pressure of the first portion and of the second portion of the tie string.

In one embodiment, the welding device is a laser welding device. The laser welding device comprises a laser beam emitter, which is configured to emit a laser beam which causes a temperature increase, which results in at least partial melting of the tie string. In one embodiment, the laser beam emitter is movable between the active position, extended towards the two portions of the tie string to be welded, and the away position, opposite to the active position.

In one embodiment, the welding device is a chemical dissolving welding device. The chemical dissolving welding device includes chemical solvents suitable for reacting with the tie string, in such a way as to cause partial dissolving of delimited areas of it.

In one embodiment, the welding device is configured to generate an electric arc.

In one embodiment, the welding device is configured to generate a thermal pulse.

In one embodiment, the welding device is configured to generate high frequency radio waves. In one embodiment, the welding device is configured to generate microwaves.

In another embodiment, the fastening unit comprises a glue release device, for gluing the first portion to the second portion of the tie string.

In one embodiment, the feeder comprises a feed roller. In one embodiment, the feeder comprises a plurality of feed rollers. In one embodiment, the hand-held unit comprises a feed motor. In one embodiment, the feed motor is an electric motor. In one embodiment, the feed motor is a brushless motor. In one embodiment, the feed motor comprises a rotor. In one embodiment, the feed motor comprises a stator. In one embodiment, the feed motor comprises a plurality of brushes. In one embodiment, the feed motor comprises a fan. In one embodiment, the feed roller is connected to the feed motor.

In one embodiment, the feed roller is configured to rotate in a positive direction of rotation. The positive direction of rotation corresponds to a feeding of the first portion of the tie string along the feed axis in the feed direction.

In one embodiment, the tying machine includes a controller. The controller in one embodiment is connected to the pulling actuator, for causing a rotation of the pulling roller.

The controller, in one embodiment, is connected to the feed roller. The controller, in one embodiment, is connected to the plurality of feed rollers. The controller in one embodiment is connected to the pulling actuator, for causing a rotation of the feed roller (or of the plurality of feed rollers). In one embodiment, the controller coupled to the feed roller constitutes the pulling member. In one embodiment, the feed roller is configured to also rotate in a negative direction of rotation, which is opposite to the positive direction. The controller, in one embodiment, is configured to drive (by means of the pulling actuator) a rotation of the feed roller in the negative direction of rotation. The controller in one embodiment is connected to the pulling actuator for inverting the direction of rotation of the feed roller, from the positive direction (for feeding the string) to the negative direction (for tightening), and vice versa. The negative direction of rotation corresponds to a pulling of the tie string along the feed axis in the pulling direction, opposite to the feed direction. The controller in one embodiment is configured to move the tie string along the feed axis and in the pulling direction. In one embodiment, the feed roller (connected to the controller) also performs the function of the pulling roller. Therefore, in one embodiment the feeder is configured to move the tie string along the feed axis in the pulling direction, opposite to the feed direction. In another embodiment, the hand-held unit comprises the pulling roller, separate from the feed roller. In one embodiment, the pulling roller is configured to rotate in the negative direction of rotation.

In one embodiment, the tying machine includes a sensor. In one embodiment, the machine includes at least one sensor. In one embodiment, the machine includes one or more sensors. In one embodiment, the machine includes a plurality of sensors.

In one embodiment, the tying machine includes a control unit.

The control unit is configured to generate a stop command to stop the tightening device. The control unit is configured to generate a start command to start the welding device. In one embodiment, the start command to start the welding device is a function of the stop command to stop the tightening device. In one embodiment, the start command to start the welding device is consecutive to the stop command to stop the tightening device.

In one embodiment, the tying machine includes a timer, connected to the control unit. The control unit is configured to send a tying start signal to the timer. The timer is configured to generate a tightening completed signal as a function of a tying start signal and of a preset time interval. The timer in one embodiment is configured to generate the tying completed signal at the end of the preset time interval, starting from when the tying start signal was received. The preset time interval in one embodiment is selectable by the user from a plurality of times, depending on the size of the shoots. In one embodiment, the control unit is configured to issue the stop command to stop the tightening device as a function of the tightening completed signal. In one embodiment, the control unit is configured to generate the start command to start the welding device as a function of a welding completed signal.

In one embodiment, the sensor (or the at least one sensor) is configured to generate a control signal. In one embodiment, the sensor (or the at least one sensor) is configured to send the control signal to the control unit. In one embodiment, each sensor of the plurality of sensors is configured to generate a control signal. In one embodiment, each sensor of the plurality of sensors is configured to send the control signal to the control unit.

In one embodiment, the control unit is configured to generate the start command to start the welding device as a function of the control signal.

In one embodiment, the sensor is a shoot size sensor. The shoot size sensor is configured to detect one or more parameters representative of a diameter of the shoot. In one embodiment, the shoot size sensor is an optical sensor. In one embodiment, the shoot size sensor is a position sensor. In one embodiment, the plurality of sensors includes a shoot size optical sensor. In one embodiment, the plurality of sensors includes a position sensor, suitable for detecting a size of the shoot.

In one embodiment, the shoot size sensor is connected to the control unit. In one embodiment, the shoot size sensor is configured to transmit to the control unit a control signal representative of the size of the shoot. In one embodiment, the control unit is configured to receive from the shoot size sensor the control signal representative of the size of the shoot.

In one embodiment, the control unit is connected to the pulling member. In one embodiment, the control unit is connected to the feed roller. In one embodiment, the control unit is connected to the pulling roller. In one embodiment, the control unit is connected to the clamp. In one embodiment, the control unit is configured to interrupt the tightening (stopping the tightening device) as a function of said control signal representative of the size of the shoot. In one embodiment, the control unit is programmed to adjust the degree of rotation of the feed roller in the negative direction as a function of the shoot diameter. In one embodiment, the control unit is programmed to adjust the degree of rotation of the pulling roller as a function of the control signal representative of the shoot diameter. In one embodiment, the control unit is configured to open the clamp as a function of the control signal representative of the shoot diameter. In this way a loop (or a slip knot) is created, having a size proportionate to the shoot diameter.

In one embodiment, said sensor is a tie string tension sensor. The tie string tension sensor is configured to detect the tension of the tie string forming the loop. In one embodiment, the plurality of sensors includes a tie string tension sensor. In one embodiment, the shoot size sensor is connected to the control unit. In one embodiment, the tie string tension sensor is configured to transmit to the control unit a signal representative of the tie string tension. In one embodiment, the control unit is configured to receive from the tie string tension sensor the control signal representative of the tie string tension.

In one embodiment, the control unit is configured to interrupt the tightening (stopping the tightening device) as a function of said control signal representative of the tie string tension. In one embodiment, the control unit is programmed to adjust the degree of rotation of the feed roller in the negative direction as a function of the signal representative of the tie string tension. In one embodiment, the control unit is programmed to adjust the degree of rotation of the pulling roller as a function of the control signal representative of the tie string tension. In one embodiment, the control unit is configured to open the clamp as a function of the control signal representative of the tie string tension. In this way a loop (or a slip knot) is created, having a size proportionate to the tie string tension.

In one embodiment, the tying machine includes both the string tension sensor and the shoot size sensor.

In one embodiment, said sensor is an electric absorption sensor. In one embodiment, the plurality of sensors includes an electric absorption sensor. The electric absorption sensor is configured to detect the electric power absorbed by the machine. The electric absorption sensor is connected to the control unit. The electric absorption sensor is configured to transmit to the control unit a control signal representative of the electric power absorbed by the machine. The control unit is configured to receive from the electric absorption sensor the control signal representative of the electric power absorbed by the machine and to interrupt the tightening as a function of said control signal.

In one embodiment, the hand-held unit includes a cutting device. In one embodiment, the cutting device includes a blade. The cutting device is located between the welding device and the feed device for cutting the portion of tie string coming out of the feeder (near the second portion of the tie string) and therefore to isolate the loop relative to the rest of the tie string. The cutting device is configured to cut tie string near the welded zone.

In one embodiment, the supporting unit includes a battery. In one embodiment, the battery is of the lithium type. In one embodiment, the pulling motor is connected to the battery by means of a power cable. In one embodiment, the transducer of the welding device is connected to the battery by means of the power cable. In one embodiment, the battery rated power supply voltage is equal to 50.4V DC.

The control unit in one embodiment is connected to the feeder. The control board in one embodiment is connected to the winding guide. The control unit in one embodiment is connected to the welding device. The inclusion of the control unit in the supporting unit rather than in the hand-held unit reduces the weight on the limb of the operator. In another embodiment, the hand-held unit includes the control unit.

In one embodiment, the supporting unit includes a roll housing compartment.

In one embodiment, the tie string comes out of the roll contained in the supporting unit and goes into the hand-held unit.

In one embodiment, the power cable connects the battery, contained in the supporting unit, with the pulling motor and with the welding device, contained in the hand-held unit.

In one embodiment, the hand-held unit comprises an ergonomic handgrip. The ergonomic handgrip is connected to the frame. The ergonomic handgrip is configured to allow a user of the machine to manually grip the hand-held unit. In one embodiment, the ergonomic handgrip is suitable for being gripped by right-handed users. In one embodiment, the ergonomic handgrip is suitable for being gripped by left-handed users.

In one embodiment, the hand-held unit includes a trigger. The trigger is connected to the frame. The trigger is connected to the control unit. The control unit is programmed to detect pressing of the trigger and consequently to activate a tying cycle. The control unit in one embodiment is configured to generate the tying start signal, as a function of pressing of the trigger, and to send it to the timer. A tying cycle consists of consecutive activation of the feeder, winding guide, welding device and cutting device. In one embodiment, the supporting unit comprises one or more straps. The one or more straps are configured to allow the user to transport the supporting unit on his or her waist or shoulders. The supporting unit in one embodiment is a backpack.

In one embodiment, the supporting unit comprises a thrust motor. In one embodiment, the thrust motor is an electric motor. In one embodiment, thrust motor is connected to the battery. In one embodiment, the thrust motor comprises a thrust roller. In one embodiment, the roll is wound on the thrust roller. In one embodiment, the tie string wound on the roll is in contact with the thrust roller. In one embodiment, the thrust motor is configured to drive the rotation of the thrust roller in such a way that it is synchronised with the feed roller. In this way, the tie string is picked up from the roll contained in the supporting unit and simultaneously fed to the winding guide.

This description also provides a method for tying shoots of plants such as grapevines, vegetable plants and climbing plants.

The method in one embodiment comprises a step of picking up one end of a tie string from a roll.

The method in one embodiment comprises a step of feeding the end of the tie string along a feed axis and in a feed direction, by means of a feeder. The method comprises a step of winding the tie string around the shoot.

In one embodiment, the winding step comprises a guided movement of the end of the tie string around the shoot, to form a loop surrounding the shoot. In other words, the end of the tie string (coming out of the feeder) is guided around the shoot to form a loop surrounding the shoot. The loop is formed by moving the end of the string near to a portion of the tie string, forming, together with the end of the string, a first pair of portions of the tie string. The guided movement step brings the first pair of portions of the tie string into the position near one another. The guided movement step is performed by means of a winding guide.

In another embodiment (in which the winding guide is movable relative to the frame between a closed configuration and an open configuration), the winding step comprises stopping the end of the tie string in one end of the winding guide (whilst the string extends along the feed axis between the end of the guide and the frame), and, then, positioning of the guide around the shoot. In this way, the tie string, initially extended along the feed axis, makes contact with the shoot and bends around it, forming the loop. In fact, by positioning the guide around the shoot, the shoot enters the recess of the hook of the winding guide, pulling the tie string with it.

The method in one embodiment includes a step of fastening the loop. The step of fastening the loop comprises permanently joining the first portion and the second portion of the tie string. Fastening is performed by fixedly joining the first portion and the second portion of the tie string.

In one embodiment, the tightening step (that is to say, the method) comprises a movement of the winding guide from an open configuration (in which one end of the winding guide is distanced from the frame) to a closed configuration (in which the end of the winding guide is in contact with the frame).

The method in one embodiment includes a step of tightening the loop. The step of tightening the loop is performed by reducing a length of the loop. In the step of tightening the loop, the length of the loop is reduced until a first portion of the tie string and a second portion of the tie string are drawn near one another. Said first portion and the second portion of the tie string constitute a second pair of portions of the tie string. In one embodiment, at least one out of said first portion and second portion is different from each of the portions of the first pair. The second portion (to which the first is drawn near) in one embodiment has already come out of the feeder and has not yet entered the winding guide. During the step of tightening the loop, the loop is tightened around the shoot.

The step of tightening in one embodiment includes a pulling of one portion of the tie string of the first pair of strings.

In one embodiment (in which the winding guide is movable between an open configuration and a closed configuration), the pulling of the portion of the tie string is performed while keeping the winding guide in the closed configuration.

The step of tightening in one embodiment includes an application of a preload to the end of the tie string and a simultaneous stopping of the tie string coming out of the feeder.

The step of tightening in one embodiment includes an application of a preload to the tie string coming out of the feeder. The step of tightening in one embodiment includes a stopping of the end of the tie string, simultaneously with pulling of the tie string coming out of the feeder. In this embodiment, the end of the tie string forms the first portion of the tie string. The step of tightening in one embodiment comprises a stopping of the end of the tie string and a movement of the tie coming out of the feeder in a pulling direction, opposite to the feed direction. In this embodiment, the end of the tie string constitutes both a portion of the first pair of portions, and a portion of the second pair of portions. The tie string then slides on a sliding guide along the pulling axis and in the pulling direction. The stopping of the end of the tie string in one embodiment is performed by means of a clamp.

The step of tightening in one embodiment includes a twisting (torsion) of the two portions of the first pair of portions of the tie string. In this embodiment, both of the portions of the first pair of portions are different from both of the portions of the second pair of portions. The twisting produces a tightening by pulling of the tie string.

The step of tightening in one embodiment comprises a sliding of a clip on the two portions of the first pair of portions, to shrink the loop, until the clip has reached the two portions of the second pair of portions.

The step of fastening in one embodiment occurs after and not simultaneously with the step of tightening. This means that the step of tightening takes place first (by sliding or slip knot effect) and the step of fastening takes place afterwards. The step of tightening precedes the step of fastening. This characteristic is an improvement on the solutions in which twisting simultaneously performs the functions of tightening and closing. In fact it allows the quantity of string used to be minimised and improved control of the reduction in the length of the loop, independently of closing.

The step of fastening in one embodiment comprises welding the first portion of the tie string to the second portion of the tie string. The step of fastening in one embodiment comprises welding the two portions of the second pair of portions of the tie string (previously drawn near one another in the step of tightening).

In one embodiment (in which the winding guide is movable between an open configuration and a closed configuration), the welding is performed while keeping the winding guide in the closed configuration.

The welding in one embodiment comprises an application of a physical action involving a transfer of thermal energy from a welding device to the first portion and to the second portion of the tie string. The welding in one embodiment comprises, simultaneously with the transfer of energy to the first portion and to the second portion of the tie string, keeping the first portion and the second portion of the tie string in a position drawn near and stationary relative to a frame. The tying machine includes a hand-held unit. The hand-held unit includes a frame. The frame is a supporting structure of the hand-held unit.

The step of fastening in one embodiment comprises moving a sonotrode towards the first portion and the second portion of the tie string. The step of fastening in one embodiment comprises a step of emitting ultrasounds from the sonotrode towards the first portion and the second portion of the tie string drawn near one another. In one embodiment, the step of fastening comprises generation of ultrasounds. The ultrasounds produce mechanical vibrations in the tie string, causing it to partly melt. The ultrasonic technology makes the step of fastening very rapid. The step of fastening in one embodiment comprises keeping under pressure the first portion and the second portion of the tie string. In one embodiment, the keeping under pressure is performed by keeping the winding guide in the closed configuration. In fact, the tie string is kept under pressure between the end of the guide and the frame. At the end of the step of keeping under pressure, the winding guide is returned to the open configuration. Simultaneously with the keeping under pressure, there is cooling of the first portion and the second portion of the tie string. The step of fastening in one embodiment comprises moving the sonotrode away from the tie string.

The step of fastening in another embodiment comprises a step of heating of a hot blade. The step of fastening in one embodiment comprises a step of interposing the hot blade between the first portion and the second portion of the tie string, to cause them to at least partly melt. The step of welding in one embodiment comprises a step of extracting the hot blade.

The step of fastening in one embodiment comprises a step of keeping under pressure the first portion and the second portion of the tie string which are at least partly melted, until they have penetrated one another and cooled. The step of fastening in one embodiment comprises emitting a laser beam towards the first portion and the second portion of the tie string drawn near one another.

The time taken by the step of fastening in one embodiment is less than 0.5 seconds.

The step of fastening in one embodiment comprises a mechanical friction of the end of the tie string and the portion of the tie string which are superposed. The step of fastening in one embodiment comprises generation of an electric arc.

In one embodiment, the step of fastening comprises more than one weld on the same first portion and second portion of the tie string. In one embodiment, the step of fastening comprises a first weld in a first welding zone, a second weld in a second welding zone. In one embodiment, the step of fastening comprises a first weld in a first welding zone, a second weld in a second welding zone, a third weld in a third welding zone. The first zone in one embodiment is adjacent to the second zone. The second zone in one embodiment is adjacent to the third zone.

The method in one embodiment comprises a step of cutting the tie string near the welded zone.

The method in one embodiment comprises a step of releasing the welded loop. The step of releasing the welded loop in one embodiment includes an opening of the winding guide. The step of releasing the welded loop in one embodiment includes a passing opening for the tie string in the winding guide.

The steps of picking up, feeding, winding, tightening, fastening, cutting, releasing constitute a tying cycle. The time taken by the tying cycle in one embodiment is between 1 and 3 seconds.

This description also provides a tie string for tying shoots of plants such as grapevines, vegetable plants and climbing plants, which does not fall under the scope of the appended claims.

The tie string in one embodiment is composed entirely of a polymer material. The polymer material in one embodiment is weldable. The tie string in one embodiment has no metallic core. The tie string in one embodiment is free of metallic components. The polymer material in one embodiment is a polyester. The polymer in one embodiment is compostable. The polymer material in one embodiment is biodegradable. The polymer material in one embodiment is biodegradable in soil. The polymer material in one embodiment is biodegradable in fresh water. The polymer material in one embodiment is biodegradable in the ocean. In one embodiment the polymer material has a degrading time of less than 1 year in soil. In one embodiment the polymer material has a degrading time of less than 1 year in fresh water. In one embodiment the polymer material has a degrading time of less than 1 year in the ocean.

The polymer material in one embodiment is edible. The polymer material in one embodiment contains a high level of recycled material.

The polymer material in one embodiment is polybutylene succinate-based. The polymer material in one embodiment is fossil-based polybutylene succinate-based. The polymer material in one embodiment is polybutylene adipate terephthalate-based.

The tie string in one embodiment is shaped like flat cable. That shape is optimum for welding, since it has two faces suitable for being drawn near each other. The flat cable in one embodiment has a thickness of less than 1 mm. The flat cable in one embodiment has a thickness of 0.3 mm. The flat cable in one embodiment has a width of between 3 mm and 7 mm. The flat cable in one embodiment has a width of 5 mm.

The flat cable in one embodiment has a constant thickness (that is to say, it has no lateral edges).

The flat cable in one embodiment has two lateral edges. The flat cable in one embodiment has a central zone, lying between the two lateral edges. In one embodiment the flat cable is thicker at the lateral edges than in the central zone. This characteristic facilitates the operation of winding and guiding the tie string around the shoot.

These and other characteristics will be more apparent in the following description of a preferred, non-limiting embodiment, illustrated by way of example only in the accompanying drawings, in which:

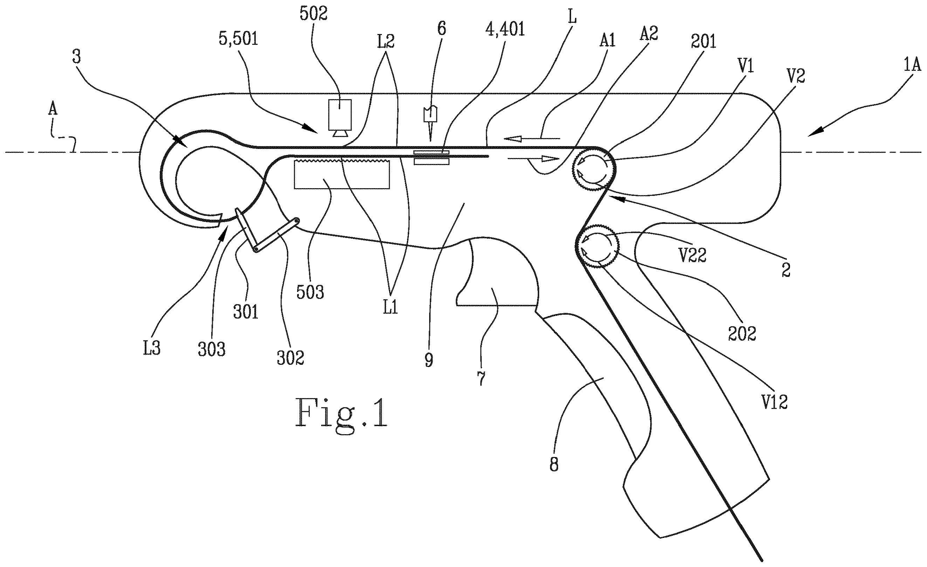

- Figure 1 illustrates one possible embodiment of a hand-held unit of the tying machine according to this description;

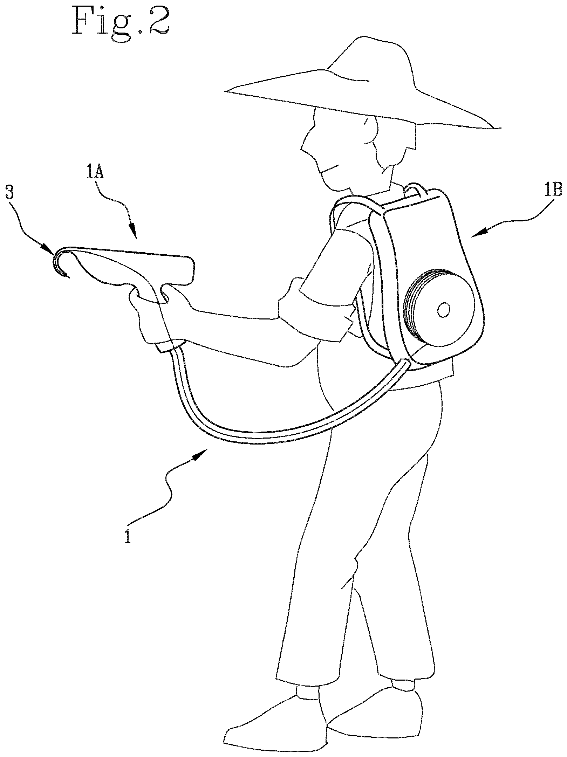

- Figure 2 illustrates one possible embodiment of a tying machine according to this description;

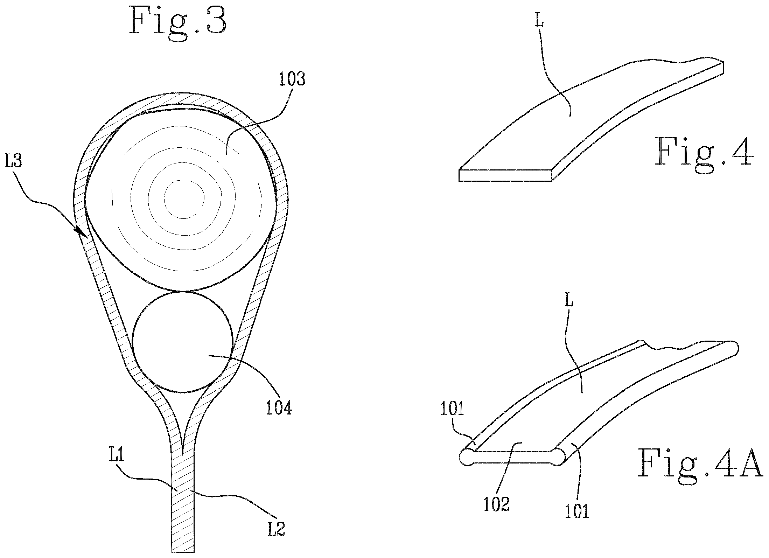

- Figure 3 illustrates a tie string welded around a shoot and a support, according to this description;
- Figures 4 and 4A illustrate two embodiments of the tie string of Figure 3;

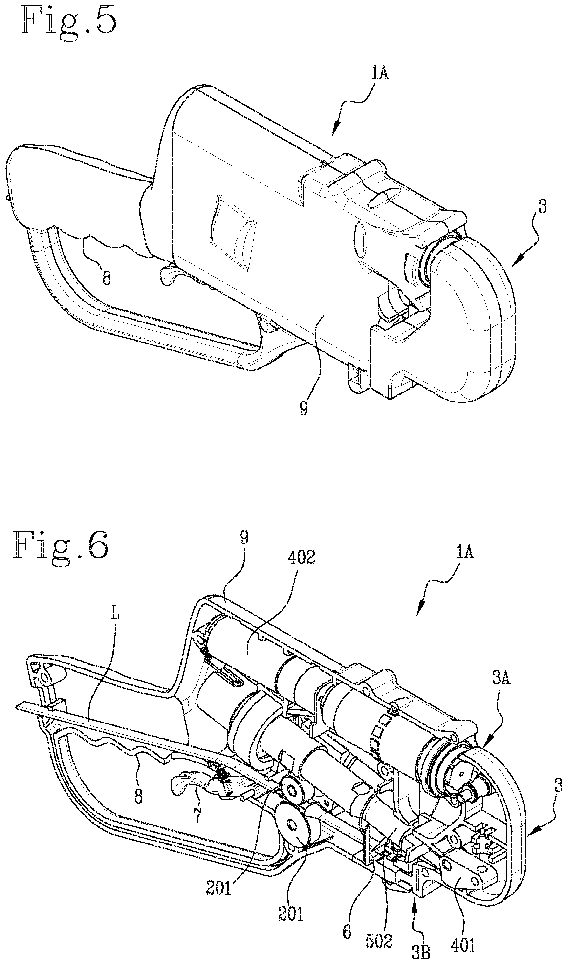

- Figure 5 illustrates one possible embodiment of the hand-held unit of Figure 1;

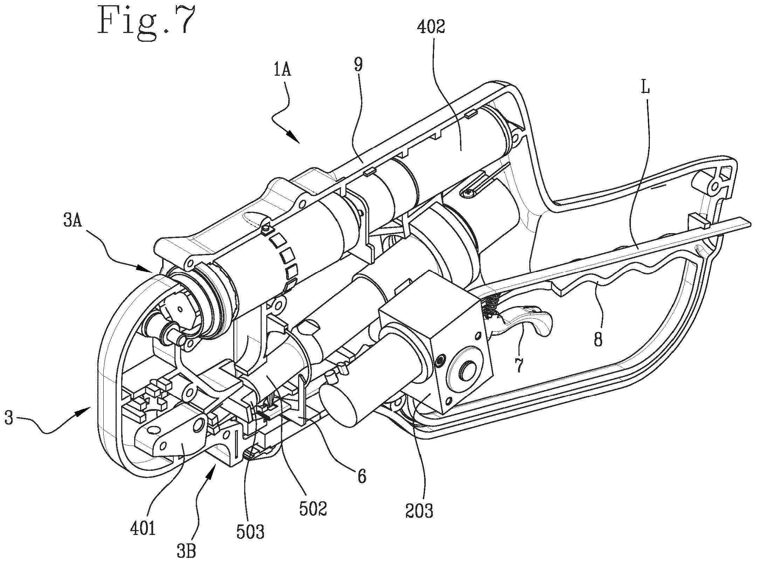

- Figures 6 and 7 are respective exploded views of the hand-held unit of Figure 5;

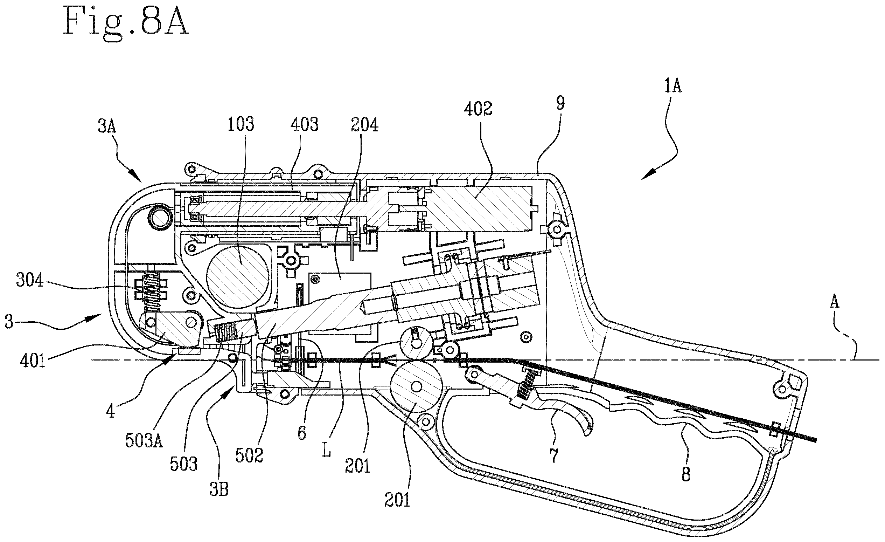

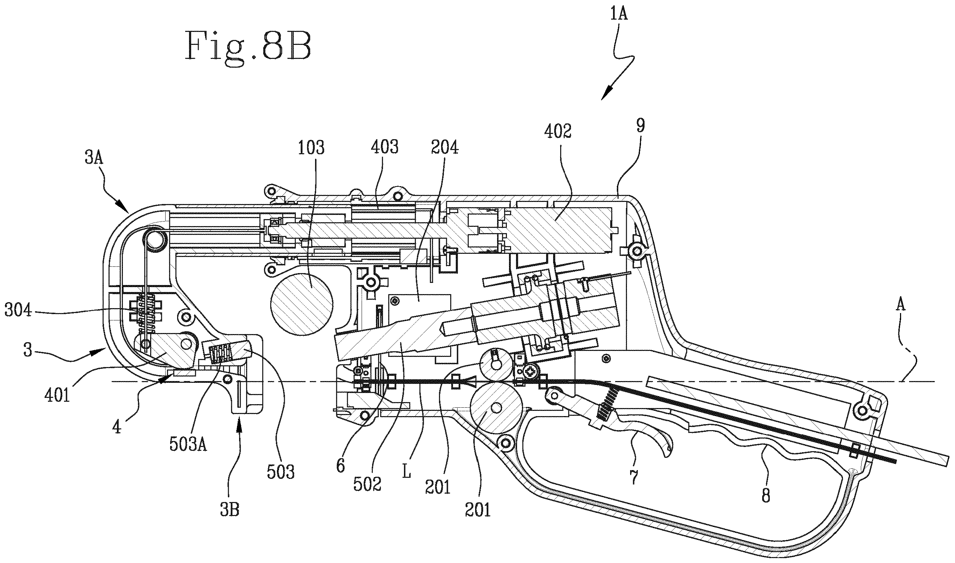

- Figures 8A and 8B are cross-sections of the hand-held unit of Figure 5, respectively in a closed configuration and in an open configuration.

In this description, the numeral 1 denotes a tying machine for tying shoots of plants such as grapevines, vegetable plants and climbing plants.

The tying machine 1 includes a tie string L.

The tying machine 1 in one embodiment includes a hand-held unit 1A. The tying machine 1 includes a supporting unit 1B.

The hand-held unit 1A includes a frame 9.

The hand-held unit 1A in one embodiment includes a feeder 2. The feeder 2 is configured to feed a first portion L1 of the tie string L along a feed axis A. The first portion L1 of the tie string in one embodiment coincides with a free end of the string. The feeder 2 is configured to feed a first portion L1 of the tie string L in a feed direction A1.

The hand-held unit 1A includes a winding guide 3. The winding guide 3 in one embodiment is hook-shaped. The winding guide 3 is configured for guiding the first portion L1 of the tie string L to form a loop L3. The loop in one embodiment surrounds a shoot 103. The loop in one embodiment surrounds a support 104.

The hand-held unit 1A includes a tightening device 4. The tightening device 4 is configured to draw near one another the first portion L1 of the tie string L and a second portion L2 of the tie string L. The tightening device 4 is configured to tighten the loop L3 around the shoot 103. The tightening device 4 is configured to tighten the loop L3 around the shoot 103 and the support 104.

The feeder 2 in one embodiment comprises a feed roller 201. The feeder 2, in one embodiment, comprises a pair of counter-rotating feed rollers 201.

The feeder in one embodiment comprises an additional feed roller 202. The feeder in one embodiment comprises a plurality of feed rollers; said plurality of feed rollers includes the feed roller 201 and the additional feed roller 202. The feed roller 201 in one embodiment has a rough surface, for creating a high level of friction upon sliding of the tie string. The additional feed roller 202 in one embodiment has a rough surface, for creating a high level of friction upon sliding of the tie string L.

The feed roller (or rollers) 201 is configured to rotate in a positive direction of rotation V1, corresponding to a movement of the tie string L along the feed axis A in the feed direction A1.

The feed roller (or rollers) 201, in one embodiment, is configured to also rotate in a negative direction of rotation V2, opposite to the positive direction of rotation V1. The negative direction of rotation V2 corresponds to a movement of the tie string L along the feed axis A in a pulling direction A2, opposite to the feed direction A1. In that embodiment, the tightening device 4 is integrated with the feeder 2. Therefore, the feed roller 201, being configured to rotate in the negative direction of rotation V2, is configured to apply a preload to the second portion L2 of the tie string L.

The additional feed roller 202 is configured to rotate in an additional positive direction of rotation V12, corresponding to a movement of the tie string L along the feed axis A in the feed direction A1. The additional feed roller 202, in one embodiment is configured to also rotate in an additional negative direction of rotation V22, opposite to the additional positive direction of rotation V12. The additional negative direction of rotation V22 corresponds to a movement of the tie string L along the feed axis A in the pulling direction A2. Therefore, the additional feed roller 202, being configured to rotate in the additional negative direction of rotation V22, is configured to apply (in synergy with the feed roller 201) a preload to the second portion L2 of the tie string L.

In one embodiment, the feeder 2 includes a rotation actuator 203, configured to drive the rotation of the roller (or the rollers) 201 and any additional rollers 202 (if present). The rotation actuator 203, in one embodiment, includes an electric motor. The rotation actuator 203, in one embodiment, includes a right angle gearbox.

In one embodiment, the hand-held unit 1A includes an optical presence sensor 204 for detecting the presence of the string F. The optical sensor 204 is configured to detect the presence of the string L downstream of the feed roller (or rollers) 201.

In one embodiment, the machine 1 includes an electronic control board (that is to say, a control unit). In one embodiment, the optical sensor 204 is connected to the electronic control board, which is configured to activate a rotation of the feed roller (or rollers) 201 in response to the signal detected from the optical sensor 204. In one embodiment, the optical sensor 204 is configured to generate a control signal, as a function of which the control unit generates a start command (which activates a rotation of the feed roller 201 or rollers 201).

The tightening device 4 in one embodiment includes a clamp 401. The clamp 401 is configured to receive and stop the first portion L1 of the tie string.

The hand-held unit 1A includes a fastening unit 5. The fastening unit 5 is configured to close the loop L3, by joining the first portion L1 and the second portion L2 of the tie string. The fastening unit 5 in one embodiment includes a welding device 501. The welding device 501 includes an ultrasound generator (sonotrode) 502. In one embodiment, the welding device 501 has a smooth surface. In one embodiment, the welding device 501 has a knurled surface.

In one embodiment, the welding device includes a vibrating unit, connected to the sonotrode (or ultrasound generator) 502. In one embodiment, the vibrating unit includes one piezoelectric transducer made of aluminium and two ceramic.

In one embodiment, the ultrasound generator 502 is configured to generate ultrasounds at a frequency equal to (or approximately equal to) 36 kHz and/or at a power equal to (or approximately equal to) 500 W and/or at a voltage equal to (or approximately equal to) 3000 V. In one embodiment, the ultrasound generator 502 is made of aluminium. In one embodiment, the ultrasound generator 502 is configured to perform welding on a rectangular welding section of the string L. Said rectangular section, in one embodiment, measures (approximately)14x6 mm.

In particular, in one embodiment, a sonotrode 502 is used which has the following specifications: frequency 36 kHz, power 500 W, voltage 3000 V, made of aluminium, string welding section 14x6 mm.

In one embodiment, the ultrasound generator 502 is configured to generate ultrasounds at a frequency equal to (or approximately equal to) 36 kHz and/or at a power equal to (or approximately equal to) 150 W and/or at a voltage equal to (or approximately equal to) 800 V. In one embodiment, the ultrasound generator 502 is made of titanium. In one embodiment, the ultrasound generator 502 is configured to perform welding on a circular welding section of the string L with diameter equal to (or approximately equal to) 10 mm.

In particular, in one embodiment, a sonotrode 502 is used which has the following specifications: frequency 36 kHz, power 150 W, voltage 800 V, made of titanium, string welding section diameter 10 mm.

The welding device 501 includes a contact surface (anvil) 503. The contact surface 503 in one embodiment has a rough surface, for creating a high level of friction upon sliding of the tie string L. The tying machine 1 is configured to make the two portions L1 and L2 of the tie string to be welded pass between the ultrasound generator 502 and the contact surface 503. The contact surface 503, in one embodiment, forms the retaining member (in combination with the welding device 501). Therefore, during welding, the two portions of tie string L which are welded are kept under pressure between the contact surface 503 and the welding device 501.

In one embodiment, the contact surface 503 (also known as the rest or anvil) has a rectangular shape. In one embodiment, the contact surface 503 has a circular shape. In one embodiment, the pressure applied to the tie string L during welding is between 10 and 15 kg (preferably, 12 kg).

In one embodiment, the contact surface 503 is located at the end 3B of the winding guide 3. In one embodiment, the contact surface 503 is coupled to the end 3B of the winding guide 3 by means of a spring 503A. In one embodiment, when the winding guide 3 is in its closed configuration, the contact surface 503 holds the tie string L pressed in a clamp constituted of the contact surface 503 itself and of the sonotrode or ultrasound generator 502.

In one embodiment, the hand-held unit 1A includes a body to which the winding guide is movably connected. In one embodiment, the winding guide 3 extends between a base 3A connected to the body (that is to say, to the frame 9), and an end 3B.

In one embodiment, the winding guide 3 is movable, relative to the body (that is to say, to the frame 9), between an open configuration and a closed configuration. In one embodiment, the winding guide 3 is coupled to the body (that is to say, to the frame 9) for translating along the feed axis A from the open configuration to the closed configuration, and vice versa.

In the open configuration, the winding guide 3 has the end 3B distanced from the body. In the closed configuration, the winding guide has the end 3B near the body. Therefore, in the closed configuration, the winding guide 3 forms a ring which entirely surrounds the shoot 103.

In one embodiment, the base 3A of the winding guide 3 is slidably (preferably: telescopically) coupled to the frame 9.

In one embodiment, tightening device 4 includes a linear actuator 402.

In one embodiment, the linear actuator 402 is coupled to the base 3A of the winding guide 3 for moving the winding guide 3 along the feed axis A (between the open, that is to say, away configuration and the closed, that is to say, near configuration).

In one embodiment, the hand-held unit 1A includes a telescopic guide configured to cause the translation (that is to say, sliding), by means of the linear actuator 402, of the winding guide 3 (and, in particular, its base 3A) between a position recessed in the body (corresponding to the closed configuration of the winding guide 3) and a position coming out of the body (corresponding to the open configuration of the winding guide 3).

In one embodiment, the linear actuator 402 is a pneumatic actuator.

In one embodiment, tie string L is fed along the feed axis A as far as a wall of the frame 9 facing the end 3B of the winding guide 3. Therefore, the tie string L (that is to say, its free end) exits the frame 9 and is fed towards the end 3B of the winding guide 3, entering the guide until it reaches the clamp 401 (which, in this embodiment, is located inside the end 3B of the winding guide 3). The string L can be fed from the wall of the frame 9 to the end 3B with the guide 3 in the open configuration (if the string has good rigidity or there is a high string feed speed), or with the guide 3 in the closed configuration. Then, the clamp 401 stops the string L. Therefore, in one embodiment, the winding guide 3 (in its open configuration and with the tie string L stopped by the clamp 401) is positioned around the shoot 103. In this way, the winding guide 3 winds the string L around the shoot 103 to form the loop L3. Then, the closed configuration of the winding guide 3 is activated, to close the loop L3 around the shoot 103. Preferably, before the loop is fastened, tightening takes place, by means of a tightener including a controller, connected to the feeder 2 (that is to say, to the rollers 201) for moving the tie string L along the feed axis A in the pulling direction A2, opposite to the feed direction A1. During tightening, the winding guide is kept in the closed configuration. Then, welding takes place, during which the winding guide 3 is kept in the closed configuration. In one embodiment, the winding guide 3 includes a second spring 304, located in the winding guide 3 between the base 3A and the end 3B. Said second spring 304, in one embodiment, is connected to the clamp 401 for keeping it in a gripping position on the tie string L. In one embodiment, the clamp 401 includes an actuator configured to open it (overcoming the thrust of the spring 304) for grasping the end of tie string L.

The hand-held unit 1A in one embodiment includes a gripping member 301. The gripping member 301 in one embodiment comprises a gripper. The gripping member 301 in one embodiment includes a rotatable first arm 302. The gripping member 301 in one embodiment includes a rotatable second arm 303. The rotatable first arm 302 is hinged to a main body of the hand-held unit 1A and is rotatable relative to a first hinge. The rotatable second arm 303 is hinged to the rotatable first arm 302 and is rotatable relative to a second hinge. The rotatable second arm 302 in one embodiment includes a gripper, configured to grasp the tie string coming out of the winding guide 3.

The hand-held unit 1A in one embodiment includes a cutting device 6. The cutting device 6 is configured to cut tie string L near the second portion L2 welded to the first portion L1.

In one embodiment, the cutting device 6 includes a guillotine blade. In one embodiment, the cutting device 6 is positioned in the body of the hand-held unit 1A.

The hand-held unit 1A in one embodiment includes a handgrip 8. The handgrip 8 is configured to allow a user to manually grip the hand-held unit 1A.

The hand-held unit 1A in one embodiment includes a trigger 7. The trigger 7 is configured to start a tying cycle.

The supporting unit 1B in one embodiment includes the roll. The supporting unit 1B is configured to be carried on the shoulders of a user. This description provides a method for tying shoots of plants such as grapevines, vegetable plants and climbing plants.

The method in one embodiment comprises a step of picking up a first portion L1 of tie string L from a roll.

The method in one embodiment comprises a step of feeding the first portion L1 of the tie string L along a feed axis A and in a feed direction A1, by means of a feeder 2. The feeding step in one embodiment comprises a rotation of a feed roller 201 in a positive direction of rotation V1. The feeding step in one embodiment comprises a rotation of an additional feed roller 202 in an additional positive direction of rotation V12.

The method in one embodiment comprises a guided movement (or winding) step of the first portion L1 of the tie string L (coming out of the feeder 2), to form a loop L3 around the shoot 103.

The method in one embodiment comprises a step of tightening the loop L3. In the step of tightening, the perimeter of the loop is reduced until the first portion L1 is drawn near (superposed on) the second portion L2. The step of tightening in one embodiment comprises stopping the first portion L1 of the tie string L, by means of a clamp 401.

The step of tightening in one embodiment comprises a movement of the second portion L2 of the tie string L in a pulling direction A2, opposite to the feed direction A1. That movement in one embodiment comprises a rotation of the pulling roller 201 in a negative direction of rotation V2. That movement in one embodiment comprises a rotation of the additional feed roller 202 in an additional negative direction of rotation V22.

The method in one embodiment comprises a step of fastening the loop L3. The step of fastening in one embodiment comprises permanently joining the first portion L1 and the second portion L2 of the tie string L.

The step of tightening in one embodiment occurs after the guided movement step. The guided movement step in one embodiment occurs after the feeding step.

The step of fastening in one embodiment occurs after and not simultaneously with the step of tightening. In other words, first the first portion L1 is stopped in the clamp 401, simultaneously with rotation of the feed roller 201 in the negative direction of rotation V2 (and of the additional feed roller 202 in the additional negative direction of rotation V22.

The step of fastening in one embodiment comprises welding of the first portion L1 of the tie string L to the second portion L2 of the tie string L. The step of fastening in one embodiment comprises a step of keeping under pressure and simultaneously cooling the first portion L1 and the second portion L2 of the tie string L. The step of keeping under pressure and simultaneously cooling in one embodiment occurs after the welding. This description provides a tie string L, which is not in the scope of the appended claims.

The tie string L in one embodiment is shaped like flat cable. The flat cable in one embodiment has uniform thickness.

The flat cable in one embodiment has a central zone 102 which is less thick than two thicker lateral edges 101 (compared with the central zone 102).

The following are descriptions of several embodiments of the string L according to this description.

The tie string L in one embodiment is made of a weldable polymer (preferably biodegradable). The tie string L in one embodiment is made of a resin (preferably biodegradable).

In one embodiment, the tie string L is made of an aliphatic polyester resin. In one embodiment, the tie string L is made of a compound of biodegradable co-polyester and polylactic acid (PLA).

In one embodiment, the tie string L is made of the material known with the brand name 'BIOFILO' or 'APINAT DP 1888'.

In one embodiment, the tie string L is made of the material known with the brand name 'BIONOLLE 3001 MD'.

In one embodiment, the tie string L is made of the material known with the brand name 'ECOVIO FS 2203'. In one embodiment, the tie string L is made of the material known with the brand name 'ECOVIO T2 308'.

The tie string L in one embodiment is shaped like flat cable with a thickness equal to (or approximately equal to) 300 µm. The tie string L in one embodiment is shaped like flat cable with a thickness equal to (or approximately equal to) 500 µm. The tie string L in one embodiment is shaped like flat cable with a thickness of between 300 µm and 500 µm.

The tie string L in one embodiment is shaped like flat cable with a thickness of between 450 µm and 550 µm. The tie string L in one embodiment is shaped like flat cable with a thickness of between 250 µm and 350 µm. A limited thickness of the flat cable increases the effectiveness of the welding, especially with welding devices which have limited power.

In one embodiment, the tie string L (shaped like flat cable) has a width of between 3 mm and 7 mm (preferably 5 mm). In one embodiment, the tie string L (shaped like flat cable) has a width of between 4 mm and 6 mm.

In particular, according to respective embodiments of this invention, welding devices are made which have one or more of the following characteristics: string L with width 5mm and thickness 300 µm; ultrasound generator with power 150 W, voltage 800 V, with titanium sonotrode having a circular section with diameter 10 mm.

## Claims

1. A tying machine (1) for tying shoots (103) of plants such as grapevines, vegetable plants and climbing plants, comprising a tie string (L) and a hand-held unit (1A), which includes:
- a frame (9), having a handgrip portion;
- a feeder (2), configured to feed the tie string (L) along a feed axis (A) in a feed direction (A1);
- a hook-shaped winding guide (3) for guiding the tie string (L) to form a loop (L3) surrounding the shoot (103), with a first pair of portions of the string in a position near one another;
- a fastening unit (5), configured to close the loop around the shoot (103),
wherein the tying machine further comprises a tightening device (4), configured to generate a sliding of the portions of the first pair of portions relative to each other and to tighten the loop (L3) around the shoot (103) by reducing a length of the loop (L3), so that a second pair of portions is formed, the second pair of portions including a first portion (L1) and a second portion (L2) of the tie string (L), wherein at least one out of portions (L1, L2) of the second pair is different from each of the portions of the first pair of portions,
**characterized in that** the fastening unit (5) includes a welding device (501), configured to weld the first portion (L1) of the tie string (L) to the second portion (L2) of the tie string (L), wherein the
tying machine (1) further comprises a control unit, configured to generate a stop command to stop the tightening device (4) and to generate a start command to start the welding device (501), as a function of the stop command to stop the tightening device (4).

2. The tying machine (1) according to claim 1, comprising at least one sensor, configured to generate a control signal, wherein the control unit is configured to generate the start command to start the welding device (501) as a function of the control signal.

3. The tying machine (1) according to claim 2, wherein the tightening device (4) includes:
- a sliding guide, configured to allow a stretch of the tie string to slide through the sliding guide itself;
- a pulling member, configured to apply a pulling action on the stretch of the tie string coupled to the sliding guide.

4. The tying machine (1) according to any one of the preceding claims, wherein the welding device (501) comprises a retaining member, configured to keep the first portion (L1) and the second portion (L2) of the tie string (L) in a stationary position relative to the frame (9) of the hand-held unit (1A), for a predetermined lapse of time.

5. The tying machine (1) according to any one of the preceding claims, wherein the tightening device (4) includes:
- a clamp (401), to hold one portion while letting the other one slide freely;
- a controller, connected to the feeder (2) to move the tie string (L) along the feed axis (A) in a pulling direction (A2), opposite to the feed direction (A1).

6. The tying machine (1) according to any one of the preceding claims, wherein the welding device (501) includes an ultrasound generator (502).

7. The tying machine (1) according to any one of the preceding claims, wherein the hook-shaped winding guide (3):
extends between a base (3A), connected to the frame (9), and an end (3B), opposite the base (3A), and
is movable relative to the frame (9) between an open configuration, in which the end (3B) is distanced from the frame (9), and a closed configuration, in which the end (3B) is near or in contact with the frame (9).

8. The tying machine according to claim 7, wherein the base (3A) of the winding guide (3) is telescopically coupled to the frame (9) and wherein the tightening device (4) includes a linear actuator (402) coupled to the base (3A) of the winding guide (3) to move the winding guide (3) parallel to the feed axis (A) between the open configuration and the closed configuration.

9. A method for tying shoots of plants such as grapevines, vegetable plants and climbing plants, through a tie string (L), comprising the following steps:
- picking up one end of the tie string (L) from a roll;
- feeding the end of the tie string (L) along a feed axis (A) and in a feed direction (A1);
- winding the tie string (L) around the shoot (103), to form a loop (L3) surrounding the shoot (103), with a first pair of portions of the string in a position near one another;
- fastening the loop (L3), by fixedly joining a first portion (L1) to a second portion (L2) of the tie string (L),
wherein it comprises, prior to the step of fastening, a step of tightening the loop (L3) through a tightening device (4), by generating a sliding of the portions of the first pair of portions relative to each other, to reduce a length of the loop (L3) itself, until drawing near the first portion (L1) of the tie string (L) and the second portion (L2) of the tie string (L), wherein a second pair of portions is formed, at least one out of portions (L1, L2) of said second pair is different from each of the portions of the first pair of portions,
**characterized in that** the step of fastening the loop (L3) comprises a welding of the first portion (L1) of the tie string (L) to the second portion (L2) of the tie string (L), through a welding device (501), and **in that** a start command to start the welding device (501) is generated by a control unit as a function of the stop command to stop the tightening device (4).

10. The method according to claim 9, wherein the welding comprises applying a physical action involving a transfer of thermal energy to the first portion (L1) and to the second portion (L2) of the tie string (L), and simultaneously keeping the first portion (L1) and the second portion (L2) of the tie string (L) in a position drawn near and stationary relative to a frame (9).

11. The method according to claim 10, wherein the step of fastening comprises a step of keeping under pressure and simultaneously cooling the first portion (L1) and the second portion (L2) of the tie string (L).

## Patentansprüche

1. Bindemaschine (1) zum Binden von Pflanzensprossen (103) wie Weinreben, Gemüsepflanzen und Kletterpflanzen, umfassend einen Bindedraht (L) und eine Handeinheit (1A), die einschließt:
- einen Rahmen (9) aufweisend einen Handgriffabschnitt;
- einen Zuführer (2), der ausgelegt ist, um den Bindedraht (L) entlang einer Zuführungsachse (A) in einer Zuführungsrichtung (A1) zuzuführen;
- eine hakenförmige Wickelführung (3) zum Führen des Bindedrahts (L), um eine Schlaufe (L3), die den Spross (103) umgibt, mit einem ersten Paar von Abschnitten des Drahts in einer Position nahe beieinander zu bilden;
- eine Befestigungseinheit (5), die ausgelegt ist, um die Schlaufe um den Spross (103) zu schließen, wobei die Bindemaschine ferner eine Spannvorrichtung (4) umfasst, die ausgelegt ist, um ein Gleiten der Abschnitte des ersten Paars von Abschnitten relativ zueinander zu erzeugen und die Schlaufe (L3) um den Spross (103) durch Verringerung einer Länge der Schlaufe (L3) zu spannen, so dass ein zweites Paar von Abschnitten gebildet wird, wobei das zweite Paar von Abschnitten einen ersten Abschnitt (L1) und einen zweiten Abschnitt (L2) des Bindedrahts (L) einschließt, wobei sich mindestens einer der Abschnitte (L1, L2) des zweiten Paars von einem jeden der Abschnitte des ersten Paars von Abschnitten unterscheidet,
**dadurch gekennzeichnet, dass** die Befestigungseinheit (5) eine Schweißvorrichtung (501) einschließt, die ausgelegt ist, um den ersten Abschnitt (L1) des Bindedrahts (L) mit dem zweiten Abschnitt (L2) des Bindedrahts (L) zu schweißen, wobei die Bindemaschine (1) ferner eine Steuereinheit umfasst, die ausgelegt ist, um einen Stoppbefehl zum Stoppen der Spannvorrichtung (4) zu erzeugen, und einen Startbefehl zum Starten der Schweißvorrichtung (501) als Funktion vom Stoppbefehl, um die Spannvorrichtung (4) zu stoppen, zu erzeugen.

2. Bindemaschine (1) nach Anspruch 1, umfassend mindestens einen Sensor, der ausgelegt ist, um ein Steuersignal zu erzeugen, wobei die Steuereinheit ausgelegt ist, um den Startbefehl zum Starten der Schweißvorrichtung (501) als Funktion des Steuersignals zu erzeugen.

3. Bindemaschine (1) nach Anspruch 2, wobei die Spannvorrichtung (4) einschließt:
- eine Gleitführung, die so ausgelegt ist, dass sie einem Teilstück des Bindedrahts ermöglicht, durch die Gleitführung selbst zu gleiten;
- ein Zugelement, das ausgelegt ist, um eine Zugwirkung auf das Teilstück des mit der Gleitführung gekoppelten Bindedrahts auszuüben.

4. Bindemaschine (1) nach einem der vorhergehenden Ansprüche, wobei die Schweißvorrichtung (501) ein Rückhalteelement umfasst, das ausgelegt ist, um den ersten Abschnitt (L1) und den zweiten Abschnitt (L2) des Bindedrahts (L) in einer stationären Position relativ zum Rahmen (9) der Handeinheit (1A) für eine vorbestimmte Zeit zu halten.

5. Bindemaschine (1) nach einem der vorhergehenden Ansprüche, wobei die Spannvorrichtung (4) einschließt:
- eine Klemme (401), um einen Abschnitt zu halten, während der andere frei gleiten lässt;
- eine Steuerung, die mit dem Zuführer (2) verbunden ist, um den Bindedraht (L) entlang der Zuführungsachse (A) in einer Zugrichtung (A2) entgegen der Zuführungsrichtung (A1) zu bewegen.

6. Bindemaschine (1) nach einem der vorhergehenden Ansprüche, wobei die Schweißvorrichtung (501) einen Ultraschallgenerator (502) einschließt.

7. Bindemaschine (1) nach einem der vorhergehenden Ansprüche, wobei die hakenförmige Wickelführung (3):
sich zwischen einer Basis (3A), die mit dem Rahmen (9) verbunden ist, und einem Ende (38), das der Basis (3A) gegenüberliegt, erstreckt und
ist beweglich relativ zum Rahmen (9) zwischen einer offenen Konfiguration, in der das Ende (3B) vom Rahmen (9) beabstandet ist, und einer geschlossenen Konfiguration, in der das Ende (3B) nahe dem Rahmen (9) ist oder diesen berührt.

8. Bindemaschine nach Anspruch 7, wobei die Basis (3A) der Wickelführung (3) teleskopartig mit dem Rahmen (9) gekoppelt ist und wobei die Spannvorrichtung (4) einen linearen Aktuator (402) einschließt, der mit der Basis (3A) der Wickelführung (3) gekoppelt ist, um die Wickelführung (3) parallel zur Zuführungsachse (A) zwischen der offenen Konfiguration und der geschlossenen Konfiguration zu bewegen.

9. Verfahren zum Binden von Pflanzensprossen wie Weinreben, Gemüsepflanzen und Kletterpflanzen durch einen Bindedraht (L), umfassend die folgenden Schritte:
- Nehmen eines Endes des Bindedrahts (L) von einer Rolle;
- Zuführen des Endes des Bindedrahts (L) entlang einer Zuführungsachse (A) und in einer Zuführungsrichtung (A1);
- Wickeln des Bindedrahts (L) um den Spross (103), um eine Schlaufe (L3), die den Spross (103) umgibt, mit einem ersten Paar von Abschnitten des Drahts in einer Position nahe beieinander zu bilden;
- Befestigen der Schlaufe (L3) durch festes Zusammenfügen eines ersten Abschnitts (L1) mit einem zweiten Abschnitt (L2) des Bindedrahts (L),
wobei es vor dem Schritt zum Befestigen einen Schritt zum Spannen der Schlaufe (L3) durch eine Spannvorrichtung (4) umfasst, wodurch ein Gleiten der Abschnitte des ersten Paars von Abschnitten relativ zueinander erzeugt wird, um eine Länge der Schlaufe (L3) selbst zu verringern, bis der erste Abschnitt (L1) des Bindedrahts (L) und der zweite Abschnitt (L2) des Bindedrahts (L) herangezogen werden, wobei ein zweites Paar von Abschnitten gebildet wird, sich mindestens einer der Abschnitte (L1, L2) des zweiten Paares von einem jeden der Abschnitte des ersten Paars von Abschnitten unterscheidet,
**dadurch gekennzeichnet, dass** der Schritt zum Befestigen der Schlaufe (L3) ein Verschweißen des ersten Abschnitts (L1) des Bindedrahts (L) mit dem zweiten Abschnitt (L2) des Bindedrahts (L), durch eine Schweißvorrichtung (501) umfasst, und dadurch, dass ein Startbefehl zum Starten der Schweißvorrichtung (501) von einer Steuereinheit als Funktion vom Stoppbefehl zum Stoppen der Spannvorrichtung (4) erzeugt wird.

10. Verfahren nach Anspruch 9, wobei das Schweißen das Anwenden einer physikalischen Aktion umfasst, die eine Übertragung von Wärmeenergie auf den ersten Abschnitt (L1) und den zweiten Abschnitt (L2) des Bindedrahts (L), und gleichzeitig das Halten des ersten Abschnitts (L1) und des zweiten Abschnitts (L2) des Bindedrahts (L) in einer Position, die nahe an einen Rahmen (9) herangezogen wird und relativ zu diesem stationär ist, umfasst.

11. Verfahren nach Anspruch 10, wobei der Schritt zum Befestigen einen Schritt zum Halten unter Druck und zum gleichzeitigen Kühlen des ersten Abschnitts (L1) und des zweiten Abschnitts (L2) des Bindedrahts (L) umfasst.

## Revendications

1. Lieuse (1) servant à lier des pousses (103) de plantes telles que des vignes, des plantes légumières et des plantes grimpantes, comprenant une ficelle à lier (L) et une unité manuelle (1A), incluant :
- un cadre (9), comportant une partie de poignée ;
- un dispositif d'alimentation (2) configuré pour alimenter la ficelle à lier (L) le long d'un axe d'alimentation (A) dans une direction d'alimentation (A1) ;
- un guide d'enroulement (3) en forme de crochet servant à guider la ficelle à lier (L) afin de former une boucle (L3) entourant la pousse (103), avec une première paire de parties de la ficelle dans une position rapprochée l'une de l'autre ;
- une unité de fixation (5), configurée pour fermer la boucle autour de la pousse (103), dans laquelle la lieuse comprend de plus un dispositif de serrage (4) configuré pour générer un coulissement des parties de la première paire de parties l'une par rapport à l'autre et pour serrer la boucle (L3) autour de la pousse (103) en réduisant une longueur de la boucle (L3), de sorte qu'une deuxième paire de parties est formée, la deuxième paire de parties incluant une première partie (L1) et une deuxième partie (L2) de la ficelle à lier (L), dans laquelle au moins une des parties (L1, L2) de la deuxième paire est différente de chacune des parties de la première paire de parties,
**caractérisée en ce que** l'unité de fixation (5) inclut un dispositif de soudage (501) configuré pour souder la première partie (L1) de la ficelle à lier (L) à la deuxième partie (L2) de la ficelle à lier (L), dans laquelle la lieuse (1) comprend de plus une unité de commande configurée pour générer une commande d'arrêt servant à arrêter le dispositif de serrage (4) et pour générer une commande de démarrage servant à démarrer le dispositif de soudage (501), en fonction de la commande d'arrêt pour arrêter le dispositif de serrage (4).

2. Lieuse (1) selon la revendication 1, comprenant au moins un capteur, configuré pour générer un signal de commande, dans laquelle l'unité de commande est configurée pour générer la commande de démarrage pour démarrer le dispositif de soudage (501) en fonction du signal de commande.

3. Lieuse (1) selon la revendication 2, dans laquelle le dispositif de serrage (4) inclut :
- un guide coulissant configuré pour permettre à une portion de la ficelle à lier de coulisser à travers le guide coulissant lui-même ;
- un organe de traction configuré pour appliquer une action de traction sur la portion de la ficelle à lier couplée au guide coulissant.

4. Lieuse (1) selon l'une quelconque des revendications précédentes, dans laquelle le dispositif de soudage (501) comprend un élément de retenue configuré pour maintenir la première partie (L1) et la deuxième partie (L2) de la ficelle à lier (L) dans une position stationnaire par rapport au cadre (9) de l'unité manuelle (1A) pendant un laps de temps prédéterminé.

5. Lieuse (1) selon l'une quelconque des revendications précédentes, dans laquelle le dispositif de serrage (4) inclut :
- une bride (401) servant à maintenir une partie tout en laissant l'autre coulisser librement ;
- un contrôleur relié au dispositif d'alimentation (2) pour déplacer la ficelle à lier (L) le long de l'axe d'alimentation (A) dans une direction de traction (A2) opposée à la direction d'alimentation (A1).

6. Lieuse (1) selon l'une quelconque des revendications précédentes, dans laquelle le dispositif de soudage (501) inclut un générateur d'ultrasons (502).

7. Lieuse (1) selon l'une quelconque des revendications précédentes, dans laquelle le guide d'enroulement (3) en forme de crochet :
se prolonge entre une base (3A), reliée au cadre (9), et une extrémité (38), opposée à la base (3A), et
est mobile par rapport au cadre (9) entre une configuration d'ouverture, dans laquelle l'extrémité (38) est éloignée du cadre (9), et une configuration de fermeture, dans laquelle l'extrémité (38) se rapproche du ou est en contact avec le cadre (9).

8. Lieuse selon la revendication 7, dans laquelle la base (3A) du guide d'enroulement (3) est couplée de manière télescopique au cadre (9) et dans laquelle le dispositif de serrage (4) inclut un actionneur linéaire (402) couplé à la base (3A) du guide d'enroulement (3) pour déplacer le guide d'enroulement (3) parallèlement à l'axe d'alimentation (A) entre la configuration d'ouverture et la configuration de fermeture.

9. Procédé destiné à lier des pousses de plantes telles que des vignes, des plantes légumières et des plantes grimpantes, par l'intermédiaire d'une ficelle à lier (L), comprenant les étapes suivantes :
- saisir une extrémité de la ficelle à lier (L) à partir d'un rouleau ;
- alimenter l'extrémité de la ficelle à lier (L) le long d'un axe d'alimentation (A) et dans une direction d'alimentation (A1) ;
- enrouler la ficelle à lier (L) autour de la pousse (103), pour former une boucle (L3) entourant la pousse (103), avec une première paire de parties de la ficelle dans une position rapprochée l'une de l'autre ;
- fixer la boucle (L3), en joignant de manière fixe une première partie (L1) à une seconde partie (L2) de la ficelle à lier (L),
dans lequel il comprend, avant l'étape de fixation, une étape de serrage de la boucle (L3) par un dispositif de serrage (4), en générant un coulissement des parties de la première paire de parties l'une par rapport à l'autre, pour réduire une longueur de la boucle (L3) elle-même, jusqu'à la rapprocher de la première partie (L1) de la ficelle à lier (L) et de la seconde partie (L2) de la ficelle à lier (L), dans laquelle une seconde paire de parties est formée, au moins l'une des parties (L1, L2) de ladite seconde paire est différente de chacune des parties de la première paire de parties,
**caractérisé en ce que** l'étape de fixation de la boucle (L3) comprend un soudage de la première partie (L1) de la ficelle à lier (L) à la seconde partie (L2) de la ficelle à lier (L), par l'intermédiaire d'un dispositif de soudage (501), et **en ce qu'**une commande de démarrage servant à démarrer le dispositif de soudage (501) est générée par une unité de commande en fonction de la commande d'arrêt pour arrêter le dispositif de serrage (4) .

10. Procédé selon la revendication 9, dans lequel le soudage comprend l'application d'une action physique impliquant un transfert d'énergie thermique à la première partie (L1) et à la deuxième partie (L2) de la ficelle à lier (L), et le maintien simultané de la première partie (L1) et de la deuxième partie (L2) de la ficelle à lier (L) dans une position tirée rapprochée et stationnaire par rapport à un cadre (9).

11. Procédé selon la revendication 10, dans lequel l'étape de fixation comprend une étape de maintien sous pression et de refroidissement simultané de la première partie (L1) et de la deuxième partie (L2) de la ficelle à lier (L).
